# EUROPÄISCHE PATENTANMELDUNG

(11) **EP 2 733 405 A1**
(43) Veröffentlichungstag der Anmeldung: **21.05.2014**
(21) Anmeldenummer: 12192996.2
(22) Anmeldetag: 16.11.2012
(51) Int. Cl.: F16L 53/00, B32B 5/26, B32B 15/14, B32B 5/02

(54) **Flexibles, transportables Flächengebilde zur Dampfbeheizung von Rohrleitungen**

(71) Anmelder: Bayer MaterialScience AG, 51373 Leverkusen (DE)
(72) Erfinder: Streinstrassen, Tobias, 47809 Krefeld (DE)
(74) Vertreter: BIP Patents

(57) **Zusammenfassung**

Gegenstand der Erfindung ist ein flexibles, transportables Flächengebilde zur Dampf-Beheizung von Rohrleitungen, Schläuchen und (Ein)-Bauteilen von technischen Anlagen.

## Beschreibung

Gegenstand der Erfindung ist ein flexibles, transportables Flächengebilde zur DampfBeheizung von Rohrleitungen, Schläuchen und (Ein)-Bauteilen von technischen Anlagen.

Rohrleitungen, Schläuche und (Ein)-Bauteile von technischen Anlagen werden im Normalbetrieb häufig begleitbeheizt. Hierunter ist beispielsweise die Beheizung eines Rohres mit einer elektrisch oder warmwasserbetriebenen Heizleitung zu verstehen, die um die Rohre gelegt und/oder mitgeführt wird. Diese Beheizungsart wird beispielsweise verwendet, um Flüssigkeiten führende Leitungen im Winter vor Frost zu schützen oder Warmwassertemperaturen vorzuhalten. Bei Ausfall der Begleitheizung oder witterungsbedingten Tieftemperaturen können sich die physikalischen Eigenschaften der in den Rohrleitungen oder Schläuchen geförderten Stoffe verändern, beispielsweise auskristallisieren, verklumpen oder durch eine ansteigende Viskosität nicht mehr fließfähig sein.

Sehr häufig handelt es sich auch um Rohrleitungen, Schläuche oder (Ein)-Bauteile von technischen Anlagen, die mit Dampf beheizt werden, so dass hier auch Temperaturen beispielsweise von bis zu 250 °C auftreten.

Bei Ausfall der Begleitheizung behilft man sich damit, dass die isolierenden Teile der Begleitheizung zunächst entfernt werden. Anschließend wird ein Dampfschlauch mit der Öffnung in die Richtung des zu beheizenden Bauteils gelegt und der Dampf auf die Oberfläche des zu beheizenden Bauteils geleitet. Dabei erreicht jedoch nur ein Teil des verwendeten Dampfes seine Bestimmung, wobei der größte Teil ungenutzt verbleibt. Darüber hinaus stellt diese offene Dampfquelle eine Unfallquelle dar. Beispielsweise sei hier an Verbrühungen, Nebelschwadenbildung und herunter tropfendes Kondensat gedacht, wobei Letzeres gerade im Winter zu Eisbildung führt und im Sommer zu entsprechender Pfützenbildung. Darüber hinaus ist aufgrund des geringen Nutzungsgrades ein sehr hoher Dampfverbrauch festzustellen.

Alternativ wird im Stand der Technik ein Dampfschlauch um das Bauteil (sofern möglich) mehrfach herumgewickelt, was sich jedoch bei einem starken unflexiblen Schlauch als problematisch gestalten kann. Dann wird der Dampf zugeführt, wobei sich der Schlauch bauartbedingt (Wärmeisolation) erwärmt. Dieser liefert jedoch häufig keine zufriedenstellende Erwärmung des Rohres, Schlauches oder (Ein)-Bauteils einer technischen Anlage innerhalb einer gewissen Zeit. Auch bei dieser Variante des Standes der Technik wird eine große Menge an Dampf benötigt.

Dementsprechend besteht ein Bedarf der schnellen, effektiven kostengünstigen Beheizung von Rohrleitungen, Schläuchen sowie (Ein)-Bauteilen von technischen Anlagen.

Die vorgenannte Aufgabe der vorliegenden Erfindung wird gelöst durch ein flexibles, transportables Flächengebilde zur Dampfbeheizung von Rohrleitungen, Schläuchen und (Ein)-Bauteilen von technischen Anlagen. Das Flächengebilde umfasst eine einseitige Metalloberfläche und ein damit flächig verbundenes, wenigstens zweilagiges Gewebe mit im Wesentlichen parallel verlaufenden, biegsamen, halbsteifen Formgebungselementen.

Kern der vorliegenden Erfindung ist somit ein Flächengebilde, das bevorzugt die Form einer Decke hat, die im Einsatz um die Rohrleitungen, Schläuche und (Ein)-Bauteile von technischen Anlagen herumgewickelt wird. Dabei wird die Dampfbeheizung eines Hohlraums zwischen dem Flächengebilde und den Rohrleitungen, Schläuchen und (Ein)-Bauteilen von technischen Anlagen durch die Einführung eines dampfführenden Schlauches mit einer Dampfaustrittsöffnung insbesondere innerhalb des Hohlraums gewährleistet. Das Flächengebilde legt sich praktisch um das Bauteil herum, wobei die Metalloberfläche den Rohrleitungen, Schläuchen und (Ein)-Bauteilen von technischen Anlagen zugewandt ist. Dementsprechend befindet sich das Gewebe im Einsatzzustand des Flächengebildes bevorzugt auf der Sichtseite.

Die im Wesentlichen parallel verlaufenden, biegsamen, halbsteifen Formgebungselemente verleihen dem erfindungsgemäßen Flächengebilde eine gewisse Steifigkeit, die es erlaubt, eine gezielte Hohlraumbildung zwischen den Flächengebilde und den Rohrleitungen, Schläuchen und (Ein)-Bauteilen von technischen Anlagen zur Verfügung zu stellen, damit dieser Hohlraum mit Dampf beaufschlagt werden kann.

Der Begriff "biegsames, halbsteifes Formgebungselement"" im Sinne der vorliegenden Erfindung ist derart zu verstehen, dass den Formgebungselementen zwar eine ausreichende Flexibilität zukommt, um eine an die jeweilige Geometrie des zu beheizenden Elements angepasste Form zu ermöglichen, diese Form dann jedoch aufgrund einer ausreichenden Formstabilität der Formgebungselemente in der Anwendung gehalten werden kann.

Dementsprechend besteht eine erste Ausführungsform der vorliegenden Erfindung in einem flexiblen, transportablen Flächengebilde zur Dampfbeheizung von Rohrleitungen, Schläuchen und (Ein)-Bauteilen von technischen Anlagen, die eine einseitige Metalloberfläche und ein damit flächig verbundenes, wenigstens zweilagiges Gewebe mit parallel verlaufenden, biegsamen, halbsteifen Formelement umfasst.

Nach einer vorteilhaften Ausgestaltung der Erfindung befinden sich die Formgebungselemente zwischen den Gewebelagen und sind insbesondere eingenäht. Hierdurch wird sichergestellt, dass das Flächengebilde besonders zuverlässig in einer vorgegebenen Form verbleibt.

Alternativ oder ergänzend hierzu kann nach einer weiteren vorteilhaften Ausgestaltung der Erfindung vorgesehen sein, dass sich die Formgebungselemente auf der Oberfläche der Gewebelage befinden, insbesondere mit dieser vernäht eingenäht sind.

Nach einer weiteren vorteilhaften Ausgestaltung der Erfindung umfassen die Formgebungselemente gewendelte Metallschläuche, wobei diese Metallschläuche in Form der bekannten Schwanenhals-Hälse ausgearbeitet sein können, die beispielsweise zur Montage von Schreibtischlampen oder Mikrofonen geeignet sind. Die Aufgabe der Formgebungselemente, insbesondere der vorgenannten Metallschläuche, besteht darin, das erfindungsgemäße Flächengebilde in einer vorgegebenen Form stabil zu halten, gleichzeitig aber auch ein Aufrollen des Flächengebildes auch zu Lagerungszwecken zu ermöglichen.

Ferner kann vorgesehen sein, dass das flexible, transportable Flächengebilde erste Befestigungseinrichtungen zur lösbaren, dampfführenden Ummantelung der Rohrleitungen, Schläuche und (Ein)-Bauteile von technischen Anlagen aufweist. Diese ersten Befestigungseinrichtungen können insbesondere in Form von Klettbändern ausgeführt sein, wobei sich eine Reihe von Klettbändern auf der Gewebeseite und eine weitere Reihe von Klettbändern auf der Metalloberfläche befindet. Beim Aufrollen des Flächengebildes verbinden sich damit die korrespondierende Klettbänder, so dass das Flächengebilde beispielsweise eine Röhre bildet. Die ersten Befestigungseinrichtungen weisen bevorzugt Widerhaken bzw. Schlaufen auf, die sich miteinander lösbar verbinden.

Darüber hinaus können nach einer weiteren vorteilhaften Ausgestaltung der Erfindung zweite Befestigungseinrichtungen vorgesehen sind, deren korrespondierende Gegenfläche (z.B. Klettbänder) sich auf der Innenseite des Flächengebildes befindet.

Nach einer vorteilhaften Ausgestaltung der Erfindung kann die Metalloberfläche zudem eine oder mehrere Reihen von dritten Befestigungseinrichtungen zur lösbaren Befestigung von Abstandshaltern mit gleicher oder unterschiedlicher Bauhöhe aufweisen. Auch die dritten Befestigungseinrichtungen können in Form von Klettbändern ausgestaltet sein, wenn auch die damit zu verbindenden Oberflächen der Abstandshalter entsprechend korrespondierend ausgestattet sind. Mithilfe der Abstandshalter kann entlang der zu erwärmenden Rohrleitung ein Hohlraum zwischen dem erfindungsgemäßen Flächengebilde und der Rohrleitung gebildet werden, in den ein Dampfschlauch eingeführt werden kann. Der Dampf streicht damit direkt über die Oberfläche der Rohrleitungen, Schläuche und (Ein)-Bauteile technischer Anlagen. Werden Abstandshalter in einem definierten Größenprofil entlang des Rohrabschnitts verwendet, so variiert beispielsweise die Größe des Hohlraums entlang eines entsprechenden Rohrabschnitts. Auf diese Weise lässt sich bei einem waagerecht verlegten Rohrabschnitt ein rohrförmig aufgewickeltes Flächengebilde mit einer der Größendifferenz der Abstandshalter untereinander entsprechenden Neigung oder Gefälle versehen, um den kondensierten Wasserdampf an definierter Stelle austreten zu lassen.

Die dritten Befestigungseinrichtungen können sich im Wesentlichen rechtwinklig zu den Formgebungselementen und den ersten Befestigungseinrichtungen erstrecken. Hinsichtlich des Materials für das flexible, transportable Flächengebilde steht eine große Auswahl geeigneter Materialien zur Verfügung. Bevorzugt umfasst das Gewebe des Flächengebildes Naturfasern, Glasfasern und/oder Polyamidfasern.

In die Gewebelagen können Absteppungen, insbesondere zur Befestigung der Formgebungselemente eingearbeitet sein. Hierdurch wird die Möglichkeit eine definierte Lage der Formgebungselemente zu realisieren weiter verbessert.

Ferner können Aufnahmeösen für wenigstens einen Dampfschlauch ebenso wie Erdungseinrichtungen vorgesehen sein, wobei letztere einer Abführung von eventuell entstehender statischer Elektrizität an eine geerdete Stelle dienen.

Ein weiterer Aspekt der vorliegenden Erfindung betrifft ein Verfahren zur Beheizung einer Rohrleitung, eines Schlauches oder eines (Ein-)Bauteils einer technischen Anlage, umfassend folgende Schritte:
- Bereitstellen eines flexiblen, transportablen Flächengebildes nach einem der Ansprüche 1 bis 13,
- Ummanteln, insbesondere Aufwickeln, des Flächengebildes auf die Rohrleitung, den Schlauch oder das (Ein-)Bauteil, unter Bildung eines Hohlraums zwischen dem Flächengebilde und der Rohrleitung, dem Schlauch oder dem (Ein-)Bauteil und
- Einführung eines dampfführenden Schlauches mit einer Dampfaustrittsöffnung in den Hohlraum oder Positionieren der Dampfaustrittsöffnung in die Nähe einer Öffnung des Hohlraums, so dass Dampf aus der Dampfaustrittsöffnung in den Hohlraum einströmen kann.

Zu den Vorteilen des erfindungsgemäßen Verfahrens wird auf das Vorstehende sowie auf die Beschreibung des Ausführungsbeispiels verwiesen.

Ein weiterer Aspekt der vorliegenden Erfindung betrifft die Verwendung wenigstens eines Flächengebildes nach einem der Ansprüche 1 bis 13, zum Ummanteln, insbesondere Aufwickeln auf eine Rohrleitung auf einen Schlauch oder ein (Ein)-Bauteil einer technischen Anlage und in sich Befestigen des Flächengebildes (1) mittels der ersten Befestigungseinrichtungen und Einführen eines Dampfschlauches in einen Hohlraum zwischen dem Flächengebilde (1) und der Rohrleitung, dem Schlauch oder dem (Ein)-Bauteil einer technischen Anlage zur Dampfbeheizung der Rohrleitung, des Schlauchs oder des (Ein)-Bauteils einer technischen Anlage.

Zu den Vorteilen der erfindungsgemäßen Verwendung wird wiederum wird auf das Vorstehende sowie auf die Beschreibung des Ausführungsbeispiels verwiesen.

Im Folgenden wird die Erfindung anhand einer ein Ausführungsbeispiel darstellenden Zeichnung näher erläutert. Es zeigen:
- Fig. 1: ein flexibles, transportables Flächengebilde in Form einer Decke in einer ersten perspektivischen Ansicht,
- Fig. 2: das Flächengebilde der Fig. 1 in einer zweiten perspektivischen Ansicht und
- Fig. 3: verschiedene Ausführungen von Abstandshaltern zum Gebrauch zusammen mit dem Flächengebilde der Fig. 1 und 2.

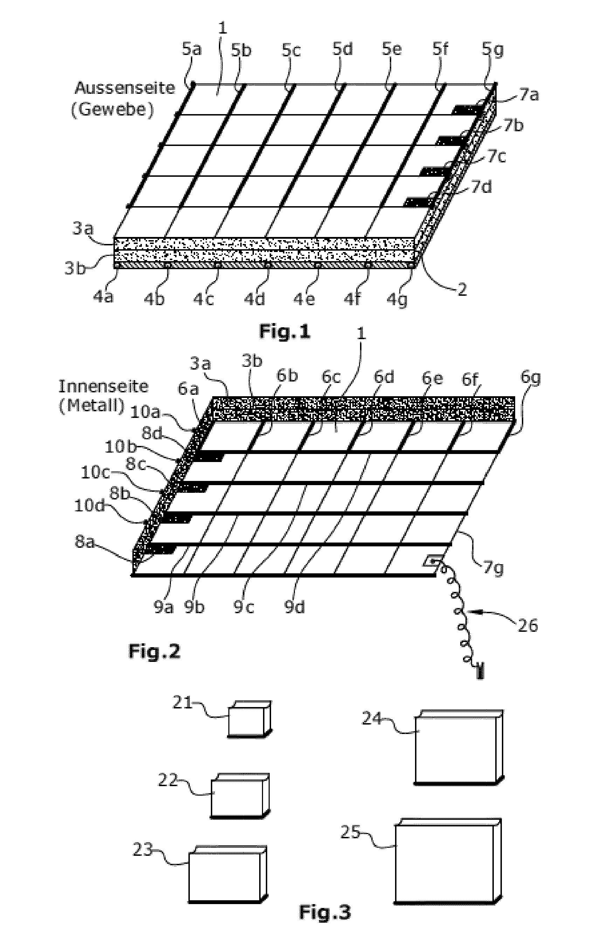

In der Fig. 1 dargestellt ist ein flexibles, transportables Flächengebilde 1 in Form einer Decke zur Beheizung von Rohrleitungen, Schläuchen und (Ein)-Bauteilen von technischen Anlagen. Das Flächengebilde 1 weist eine einseitige Metalloberfläche 2 auf, die im praktischen Betrieb des Flächengebildes 1 den zu beheizenden Rohrleitungen, Schläuchen und (Ein)-Bauteilen zugewandt ist. Das wenigstens zweilagige Gewebe 3a, 3b, welches Naturfasern, Glasfasern und/oder Polyamidfasern umfassen kann, weist eine Reihe von im Wesentlichen parallel, vorliegend exakt parallel, verlaufenden, angenähten oder eingenähten, biegsamen, halbsteifen gewendelten Formgebungselementen 4a, 4b, 4c, 4d, 4e, 4f, 4g auf. In der Fig. 1 sind diese Formgebungselemente 4a, 4b, 4c, 4d, 4e, 4f, 4g in die Metalloberfläche 2 (Metallbeschichtung, Metallfolie) integriert.

Alternativ können sich die Formgebungselemente 4a, 4b, 4c, 4d, 4e, 4f, 4g auch zwischen den Gewebelagen 3a, 3b befinden oder auch zwischen der Metalloberfläche 2 und dem wenigstens zweilagigen Gewebe 3; 3b.

Werden die Formgebungselemente 4a, 4b, 4c, 4d, 4e, 4f, 4g zwischen den Gewebelagen 3a und 3b integriert, so befinden sich diese nicht in unmittelbarem Kontakt mit der im Betrieb heiß werdenden Metalloberfläche 2, sondern befinden sich innerhalb des mehr oder weniger wärmeisolierenden Gewebes. Schließlich können sich die Formgebungselemente 4a, 4b, 4c, 4d, 4e, 4f, 4g aber auch auf der Oberfläche der Gewebelage 3a befinden, so dass diese auf der Sichtseite der Flächengebildes 1 im Betrieb erkennbar sind.

In allen vorgenannten Varianten ist es möglich und insbesondere bevorzugt, die Formgebungselemente 4a, 4b, 4c, 4d, 4e, 4f, 4g mit den Gewebelagen zu vernähen, bzw. die Formgebungselemente 4a, 4b, 4c, 4d, 4e, 4f, 4g zwischen die Gewebelagen 3a, 3b einzunähen. Dadurch erreicht das Flächengebilde 1 gleichermaßen hohe Flexibilität aber auch eine hohe Stabilität während des Einsatzes.

Die Formgebungselemente 4a, 4b, 4c, 4d, 4e, 4f, 4g können ferner als gewendelte Metallschläuche ausgebildet sein (nicht dargestellt). Im Einzelnen können die Metallschläuche in Form der bekannten Schwanenhals-Hälse ausgearbeitet sein, die beispielsweise zur Montage von Schreibtischlampen oder Mikrofonen geeignet sind. Die Aufgabe dieser Formgebungselemente 4a, 4b, 4c, 4d, 4e, 4f, 4g, insbesondere der Metallschläuche besteht darin, das Flächengebilde 1 in einer vorgegebenen Form stabil zu halten, gleichzeitig aber auch ein Aufrollen des Flächengebildes 1 auch zu Lagerungszwecken zu ermöglichen. Weiterhin ist es möglich, das Flächengebilde 1 um eine Rohrleitung etc. konzentrisch mit gegebenenfalls äquidistantem Abstand herumzuwickeln.

Zur in sich Befestigung des Flächengebildes 1 dienen eine Reihe von ersten Befestigungseinrichtungen 5a, 5b, 5c, 5d, 5e, 5f, 5g, 6a, 6b, 6c, 6d, 6e, 6f, 6g auf der Außenseite bzw. Innenseite des Flächengebildes 1, wenn dieses in Gebrauch ist. Diese ersten Befestigungseinrichtungen 5a, 5b, 5c, 5d, 5e, 5f, 5g, 6a, 6b, 6c, 6d, 6e, 6f, 6g können insbesondere in Form von Klettbändern ausgeführt sein, wobei sich eine Reihe von Klettbändern 5a, 5b, 5c, 5d, 5e, 5f, 5g auf der Gewebeseite 3a und eine weitere Reihe 6a, 6b, 6c, 6d, 6e, 6f, 6g von Klettbändern auf der Metalloberfläche 2 befindet. Beim Aufrollen des Flächengebildes 1 verbinden sich damit die kongruenten Klettbänder, so dass das Flächengebilde 1 beispielsweise eine Röhre bildet. Die ersten Befestigungseinrichtungen 5a, 5b, 5c, 5d, 5e, 5f, 5g, 6a, 6b, 6c, 6d, 6e, 6f, 6g weisen bevorzugt Widerhaken bzw. Schlaufen auf, die sich miteinander lösbar verbinden.

Diese Klettbänder 5a, 5b, 5c, 5d, 5e, 5f, 5g, 6a, 6b, 6c, 6d, 6e, 6f, 6g verlaufen im Falle der Fig. 1 ebenfalls parallel zu den Formgebungselementen 4a, 4b, 4c, 4d, 4e, 4f, 4g. Die ersten Befestigungseinrichtungen 5a, 5b, 5c, 5d, 5e, 5f, 5g korrespondieren gegebenenfalls in der Länge mit den auf der gegenüberliegenden Fläche vorhandenen ersten Befestigungseinrichtungen 6a,6b, 6c, 6d, 6e, 6f, 6g, die eine überlappende Fixierung des Flächengebildes 1 ermöglichen. Die Formgebungselemente 4a, 4b, 4c, 4d, 4e, 4f, 4g sind dabei in der Fig. 1 an der Unterseite des Gewebes 3b angeordnet und grenzen somit an die Metalloberfläche 2 an.

In das zwecks Isolation doppellagig ausgeführte und bevorzugt kassettenförmig abgesteppte Gewebe 3a,3b können die gegebenenfalls herausnehmbaren flexiblen, aber formstabilen Formgebungselemente 4a, 4b, 4c, 4d, 4e, 4f, 4g eingearbeitet sein. Durch die Anordnung der ersten Befestigungseinrichtungen 5a, 5b, 5c, 5d, 5e, 5f, 5g mit beispielsweise Widerhaken auf der Außenseite und Schlaufen auf der Innenseite des Flächengebildes 1, können auch komplexe Bauteile, wie beispielsweise Pumpen, Zähler oder Ähnliches mit einer oder mehreren aneinander "gekletteten" Flächengebilden 1 "eingehaust" und beheizt werden.

Während in der Fig. 1 die Gewebeseite (Sichtseite) des Flächengebildes 1 hervorgehoben ist, wird in der Fig. 2 nachfolgend die die Metalloberfläche 2 bildende, in Betrieb bevorzugt dem einzuhausenden Gegenstand zugewandte Oberfläche des Flächengebildes 1 hervorgehoben.

Das Flächengebilde 1 gemäß Fig. 1 weist weitere zweite Befestigungseinrichtungen 7a, 7b, 7c, 7d auf, deren korrespondierende Gegenfläche (Klettbänder 8a,8b,8c,8d) sich auf der Innenseite des Flächengebildes 1 befindet. Die zweiten Befestigungseinrichtungen 8a, 8b, 8c, 8d sind nicht in der Fig. 1 sondern in der Fig. 2 dargestellt.

In der Fig. 2 wird die die Metalloberfläche 2 bildende Fläche des zweilagigen Flächengebildes 1 hervorgehoben. Rechtwinklig zu den kurzen Abschnitten der ersten Befestigungseinrichtungen 6a, 6b, 6c, 6d, 6e, 6f, 6g, die mit den in Fig. 1 dargestellten ersten Befestigungseinrichtungen 5a, 5b, 5c, 5d, 5e, 5f, 5g korrespondieren, verlaufen hier dritte Befestigungseinrichtungen 9a, 9b, 9c, 9d, 9e, 9f, 9g, die zur lösbaren Befestigung von Abstandshaltern 21, 22, 23, 24 und 25 (vgl. Fig. 3) dienen. Auch die dritten Befestigungseinrichtungen 9a, 9b, 9c, 9d, 9e, 9f, 9g können in Form von Klettbändern ausgestaltet sein, wenn auch die damit zu verbindenden Oberflächen der Abstandshalter 21, 22, 23, 24, 25 entsprechend korrespondierend ausgebildet sind.

Die in Fig. 3 dargestellten Abstandshalter 21, 22, 23, 24, 25 weisen eine ebene Unterfläche und eine gegenüberliegende konkave Fläche auf, die an die konvexe Oberfläche einer Rohrleitung angepasst sein kann. Werden diese Abstandshalter 21, 22, 23, 24, 25 entlang den Klettbändern 9a, 9b, 9c, 9d, 9e, 9f, 9g angebracht bevor das Flächengebilde 1 um die Rohrleitung etc. gewickelt wird, so bildet sich entlang der Rohrleitung ein Hohlraum zwischen dem Flächengebilde 1 und der Rohrleitung, in die ein Dampfschlauch eingeführt werden kann. Der Dampf streicht damit direkt über die Oberfläche der Rohrleitungen, Schläuche und (Ein)-Bauteile von technischen Anlagen. Verwendet man die Abstandshalter 21, 22, 23, 24, 25 in einem definierten Größenprofil entlang des Rohrabschnitts, so variiert beispielsweise die Größe des Hohlraums entlang eines entsprechenden Rohrabschnitts, z.B. unter Ausbildung einer Trichtergeometrie. Auf diese Weise lässt sich bei einem waagerecht verlegten Rohrabschnitt ein rohrförmig aufgewickeltes Flächengebilde 1 mit einer der Größendifferenz des Abstandshalters 21, 22, 23, 24, 25 entsprechenden Neigung oder Gefälle versehen, um den kondensierten Wasserdampf an definierter Stelle austreten zu lassen. Auch lassen sich Strömungsprofile des Dampfs konkret herstellen, insbesondere wenn mehrere Flächengebilde 1 miteinander kombiniert werden.

Mit Hilfe von den in einem definiertem Abstand auf der Innenseite des Flächengebildes 1 auf dem Klettband 9a, 9b, 9c, 9d befindlichen Abstandshaltern 21, 22, 23, 24, 25 kann vermieden werden, dass das Flächengebilde 1 direkt auf der Rohrleitung aufliegt, wodurch eine vollständige Erwärmung des Rohres erreicht wird. Beispielsweise kann zu jedem Flächengebilde 1 pro 50 cm Länge ein Abstandshalter 21, 22, 23, 24, 25 aus beispielsweise hitzefestem Kunststoff angebracht werden. Diese Abstandshalter 21, 22, 23, 24, 25 sollten jeweils über die Klettbänder 9a, 9b, 9c, 9d, 9e an dem Flächengebilde 1 angebracht werden, und können in der Bauhöhe unterschiedlich sein, so dass man auch bei einer waagerechten Rohrleitung ein Gefälle für das Flächengebilde 1 vorsehen kann.

Wenn das Flächengebilde 1 auf den zu beheizenden Rohrleitungen, Schläuchen oder (Ein)-Bauteilen von technischen Anlagen positioniert ist, wird ein Dampfschlauch (nicht dargestellt) in den möglichst auf hohem Niveau liegenden Bereich der Flächengebilde 1 gelegt und die Dampfleitung geöffnet. Durch die im Niveau tiefer liegende Öffnung am anderen Ende des Flächengebildes 1 kann Restdampf und/oder das entstehende Kondensat entweichen. Durch seinen hohen Energiegehalt kann der an dem zu beheizenden Bauteil kondensierenden Dampf jetzt optimal genutzt werden.

In Fig. 2 dargestellt sind darüber hinaus fünf bzw. vier Aufnahmeösen 10a, 10b, 10c, 10d für einen einzusetzenden Dampfschlauch. Das Flächengebilde 1 kann darüber hinaus auch Spiralkabel mit Erdungszangen 26 als Erdungseinrichtung umfassen, um eine Abführung von eventuell entstehender statischer Elektrizität an eine geerdete Stelle zu gewährleisten.

## Patentansprüche

1. Flexibles, transportables Flächengebilde (1) zur Dampfbeheizung von Rohrleitungen, Schläuchen und (Ein)-Bauteilen von technischen Anlagen, umfassend eine einseitige Metalloberfläche (2) und ein damit flächig verbundenes, wenigstens zweilagiges Gewebe (3a, 3b) mit im Wesentlichen parallel verlaufenden, biegsamen, halbsteifen Formgebungselementen (4a, 4b, 4c, 4d, 4e, 4f, 4g).

2. Flächengebilde (1) nach Anspruch 1, **dadurch gekennzeichnet, dass** sich die Formgebungselemente (4a, 4b, 4c, 4d, 4e, 4f, 4g) zwischen den Gewebelagen (3a,3b) befinden, insbesondere eingenäht sind.

3. Flächengebilde (1) nach Anspruch 1, **dadurch gekennzeichnet, dass** sich die Formgebungselemente (4a, 4b, 4c, 4d, 4e, 4f, 4g) auf der Oberfläche der Gewebelage (3a) befinden, insbesondere mit dieser vernäht eingenäht sind.

4. Flächengebilde (1) nach einem der Ansprüche 1 bis 3, **dadurch gekennzeichnet, dass** die Formgebungselemente (4a, 4b, 4c, 4d, 4e, 4f, 4g)gewendelte Metallschläuche umfassen.

5. Flächengebilde (1) nach einem der Ansprüche 1 bis 4, **dadurch gekennzeichnet, dass** dieses erste Befestigungseinrichtungen (5a, 5b, 5c, 5d, 5e, 5f, 5g,6a, 6b, 6c, 6d, 6e, 6f, 6g) zur lösbaren, dampfführenden Ummantelung der Rohrleitungen, Schläuche und (Ein)-Bauteile von technischen Anlagen aufweist.

6. Flächengebilde (1) nach Anspruch 5, **dadurch gekennzeichnet, dass** die ersten Befestigungseinrichtungen (5a, 5b, 5c, 5d, 5e, 5f, 5g,6a, 6b, 6c, 6d, 6e, 6f, 6g) Klettbänder mit Widerhaken oder Schlaufen aufweisen.

7. Flächengebilde (1) nach einem der Ansprüche 1 bis 6, **dadurch gekennzeichnet, dass** sie zweite Befestigungseinrichtungen (7a, 7b, 7c, 7d, 8a, 8b, 8c, 8d) zur lösbaren Verbindung von mehreren Flächengebilden (1) aufweisen.

8. Flächengebilde (1) nach einem der Ansprüche 1 bis 7, **dadurch gekennzeichnet, dass** die Metalloberfläche (2) eine oder mehrere Reihen von dritten Befestigungseinrichtungen (9a, 9b, 9c, 9d, 9e) zur lösbaren Befestigung von Abstandshaltern (21, 22, 23, 24, 25) mit gleicher oder unterschiedlicher Bauhöhe aufweist.

9. Flächengebilde (1) nach Anspruch 8, **dadurch gekennzeichnet, dass** sich die dritten Befestigungseinrichtungen (9a, 9b, 9c, 9d) im Wesentlichen rechtwinklig zu den Formgebungselementen (4a, 4b, 4c, 4d, 4e, 4f, 4g) und den ersten Befestigungseinrichtungen (5a, 5b, 5c, 5d, 5e, 5f, 5g, 6a, 6b, 6c, 6d, 6e, 6f, 6g) erstrecken.

10. Flächengebilde (1) nach einem der Ansprüche 1 bis 9, **dadurch gekennzeichnet, dass** das Gewebe (3a, 3b) Naturfasern, Glasfasern und/oder Polyamidfasern umfasst.

11. Flächengebilde (1) nach einem der Ansprüche 1 bis 10, **dadurch gekennzeichnet, dass** die Gewebe Absteppungen insbesondere zur Befestigung der Formgebungselemente aufweisen.

12. Flächengebilde (1) nach einem der Ansprüche 1 bis 11, **dadurch gekennzeichnet, dass** sie Aufnahmeösen (10a, 10b, 10c, 10d, 10e) für wenigstens einen Dampfschlauch aufweisen.

13. Flächengebilde (1) nach einem der Ansprüche 1 bis 12, **dadurch gekennzeichnet, dass** sie Erdungseinrichtungen 26 aufweist.

14. Verfahren zur Beheizung einer Rohrleitung, eines Schlauches oder eines (Ein-) Bauteils einer technischen Anlage, umfassend folgende Schritte:
- Bereitstellen eines flexiblen, transportablen Flächengebildes (1) nach einem der Ansprüche 1 bis 13,
- Ummanteln, insbesondere Aufwickeln, des Flächengebildes (1) auf die Rohrleitung, den Schlauch oder das (Ein-)Bauteil, unter Bildung eines Hohlraums zwischen dem Flächengebilde (1) und der Rohrleitung, dem Schlauch oder dem (Ein-)Bauteil und
- Einführung eines dampfführenden Schlauches mit einer Dampfaustrittsöffnung in den Hohlraum oder in die Nähe einer Öffnung des Hohlraums, so dass Dampf in den Hohlraum einströmen kann.

15. Verwendung wenigstens eines Flächengebildes (1) nach einem der Ansprüche 1 bis 13, zum Ummanteln, insbesondere Aufwickeln auf eine Rohrleitung, auf einen Schlauch oder ein (Ein)-Bauteil einer technischen Anlage und in sich Befestigen des Flächengebildes (1) mittels der ersten Befestigungseinrichtungen (5a, 5b, 5c, 5d, 5e, 5f, 5g, 6a, 6b, 6c, 6d, 6e, 6f, 6g und Einführen eines Dampfschlauches in einen Hohlraum zwischen dem Flächengebilde (1) und der Rohrleitung, dem Schlauch oder dem (Ein)-Bauteil einer technischen Anlage zur Dampfbeheizung der Rohrleitung, des Schlauchs oder des (Ein)-Bauteils einer technischen Anlage.
